# EUROPEAN PATENT SPECIFICATION

(11) **EP 1 014 552 B1**
(45) Date of publication and mention of the grant of the patent: **23.04.2003**
(21) Application number: 98830775.7
(22) Date of filing: 23.12.1998
(51) Int. Cl.: H02M 7/5387

(54) **Conversion of a numeric command value in a constant frequency PWM drive signal for an electromagnetic load**
Umwandlung von einem numerischen Befehlswert in ein Pulsbreitenmodulationsantriebsignal mit konstanter Frequenz für eine elektromagnetische Last
Conversion d'une valeur de commande numérique dans un signal à modulation par largeur d'impulsion et à fréquence constante pour une charge électromagnétique

(43) Date of publication of application: 28.06.2000
(73) Proprietor: STMicroelectronics S.r.l., 20041 Agrate Brianza (Milano) (IT)
(72) Inventor: Galbiati, Ezio, 26020 Agnadello (IT); Papillo, Lorenzo, 20154 Milano (IT); Chrappan Soldavini, Francesco, 20091 Bresso (IT)
(74) Representative: Pellegri, Alberto

(56) References cited:
- EP-A- 0 892 500
- US-A- 4 233 591
- US-A- 4 590 457

## Description

### FIELD OF THE INVENTION

The present invention relates to driving techniques of a generic electromagnetic R-L actuator through an output power bridge.

More precisely, the invention relates to PWM driving techniques of an output bridge stage thus controlling the voltage applied to the actuator and so determine the current that actually flows through it, wherein the PWM control signal is generated by a circuit that converts an N bits digital value into a digital signal of amplitude compatible with the input characteristics of the output stage having a fixed frequency and a duty cycle proportional to the input value.

### BACKGROUND OF THE INVENTION

An example of a conversion system of an N bit digital value in a PWM signal is disclosed in the European patent application No. 96830295.0 filed on May 22, (EP-A-0 809 349) 1996, in the name of the same applicant, wherein, by way of example, N was taken to be equal to eight

In these driving systems, numeric values resulting from sampling (digitizing) of a certain driving waveform (that may be suitably optimized), may be read from one or more nonvolatile memory buffers and multiplied by a modulating variable whose magnitude is determined by the control system, depending on the force, torque or speed required by the electromagnetic actuator and written in register. A certain pre-established number (N) of most significant bits resulting from the multiplication are thereafter used as the driving numeric value.

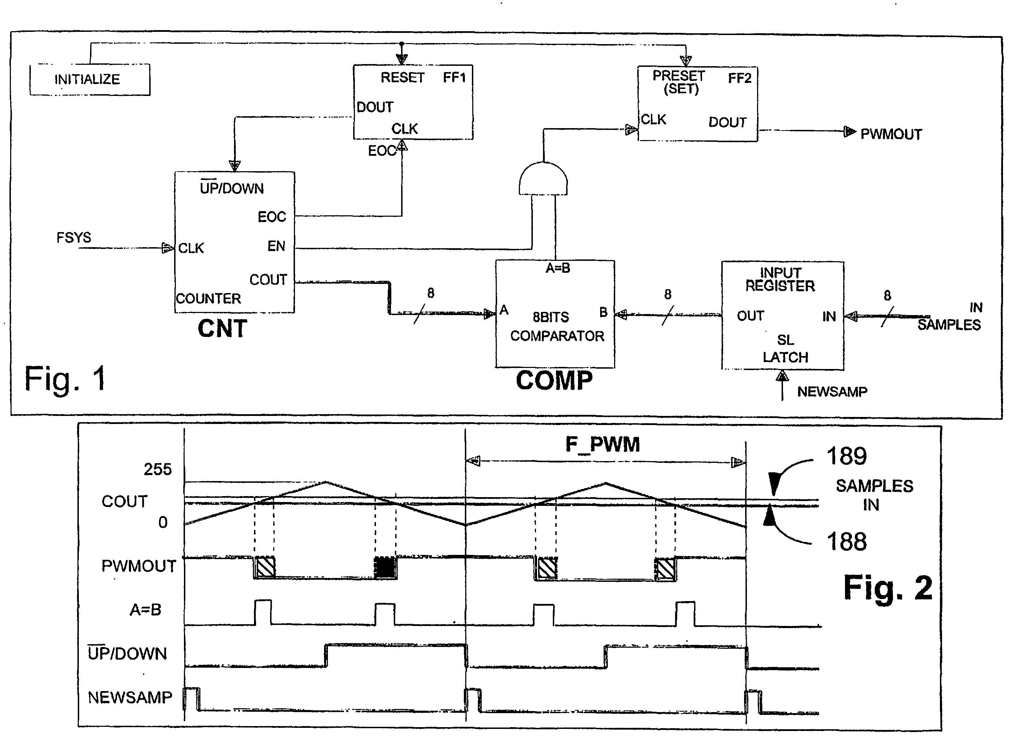

Such a converting system is shown in Fig. 1 and is based upon comparing the input BYTE (N=8), representing the sample value to be converted, with the status of an 8-bit timer functioning in a continuous up/down mode.

In Figures 1 and 2, the sample or BYTE (because N=8) to be converted is synchronously loaded onto the SL register in order to avert a sample updating during the conversion.

The comparator COMP generates a clock pulse for the toggle FF2, each time the counter CNT equals the value of the sample to be converted.

The outcome is the generation of a PWMOUT signal whose duty cycle varies proportionally with the input value and symmetrically in respect to the maximum count value of the counter.

As may be observed in Fig. 2, the unit increment (highlighted in the figure) of the input sample value to be converted determines a double and symmetric decrement of the output duty cycle.

In Fig. 2, the transition from the value 188 to the value 189 determines the duty cycle variation shown by way of a dashed-line.

When driving an output bridge stage, where the current is controlled in a pulse shift modulation (PSM) mode according to the technique that is commonly implemented in these types of power drivers and whose description may be found in the European patent application No. 95830371.1, filed on August 31, 1995, (EP-A-0 760 552) in the name of the same applicant, two values must be converted, one for each output half bridge, of a value symmetrical to 2^{N}/2.

In these applications, to a unit increment of the value forced in a half bridge corresponds a unit decrement of the value forced in the other half bridge, in order to maintain the above cited symmetry, this implies a double differential increment of the duty cycle, as compared to the preceding case.

US-A-4590457 discloses a pulse width digital to analog converter that provides an output clock rate that is a multiple of the input sampling rate.

A latch is used to store N-bit digital word representing the analog signal value to be generated. (N - K) for the most significant bits are stored in a counter which decrements its count in response to a clock signal. A plurality of least significant bits of said digital word stored in the latch are applied to a logic circuit and a ring counter is used to indicate which section of the output signal is currently being generated.

EP-A-0892500 is a prior application of the same applicant published after the date of filing of the present application. This earlier application discloses a system for increasing the definition in converting a N + 2 bit value in a PWM signal of constant frequency by means of a N-bit up/down counter.

### OBJECT AND SUMMARY OF THE INVENTION

The object of the invention is to avoid these ample duty cycle variations for unit value variations of input samples of a bridge driving system.

Fundamentally, the method of the present invention consists in separately handling the four instants of comparison between the input datum and the output of the up/down, counter while ensuring that the minimum variation of the duty cycle, in terms of temporal space, is substantially halved by exploiting the half clock period of the system.

This allows to obtain 7 intermediate levels of duty cycle variation between any two consecutive values of the 8 bits input datum.

According to an aspect of the invention, an increment of definition of the conversion process is achieved by increasing of a certain number of bits, for example from N to N+3, the size of the driving numeric value (commonly resulting from the product of a sampled value with a modulating value) to be converted without increasing the number of bits of the up/down counter with which the comparison is carried out.

### BRIEF DESCRIPTION OF THE DRAWINGS

**Figure 1** is a scheme of a known BYTE/PWM (N=8) converter.
**Figure 2** shows the signals generated by the circuit of Fig. 1.
**Figures 3a, 3b, 3c** and **3d** respectively show an output stage driven by signals originating from the NBITS/PWM converter and the relative driving signals.
**Figure 4** highlights the duty cycle variation determined by a unit variation of the digital value being converted in a PWM signal, according to the present invention.
**Figure 5** illustrates a timing diagram of the system of the present invention;
**Figure 6** is a block diagram of the system of the present invention.
**Figure 7** shows the phase relationship among the output signals of the cascade of flip-flops of the diagram of Fig. 6, fed with the PWM_A signal.
**Figure 8** shows a truth table of the MULTIPLEXER block of the diagram of Fig. 6.

### DESCRIPTION OF AN EMBODIMENT OF THE INVENTION

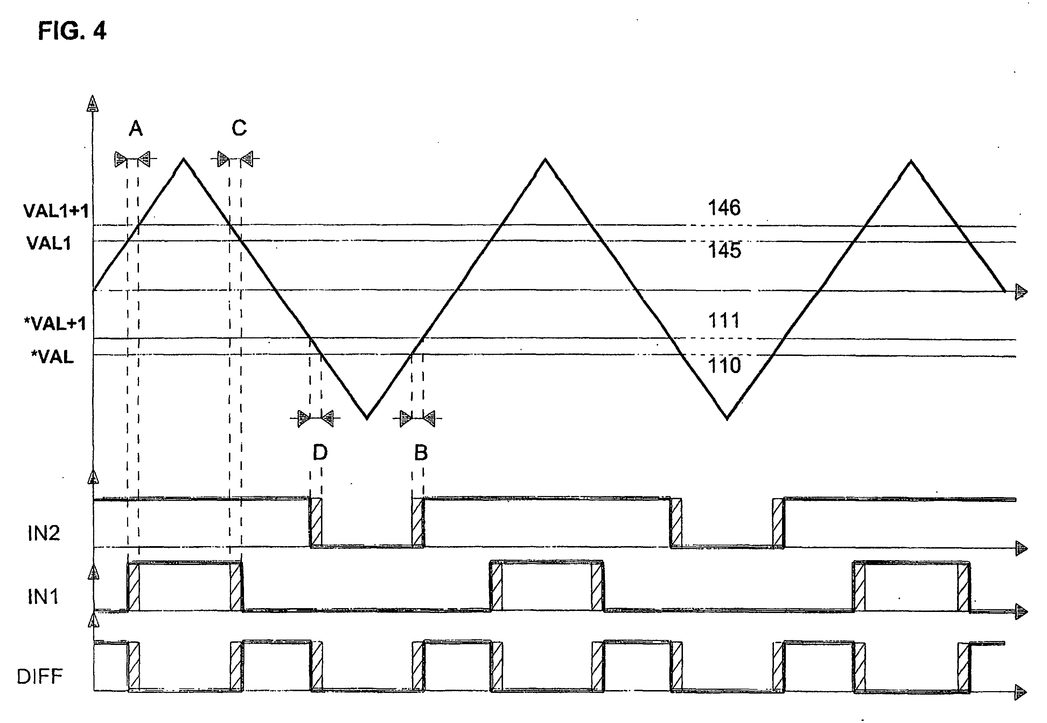

The embodiment that is described herein below is illustrated in Figures 4-8 and refers to the driving of an R-L load through an output bridge stage which requires the generation of a dual pair of PWM driving signals IN_A and IN_B, respectively, as function of a certain numeric command value DATAIN. Of course, the invention is also useful for the case of a driving stage requiring the generation of a single PWM signal.

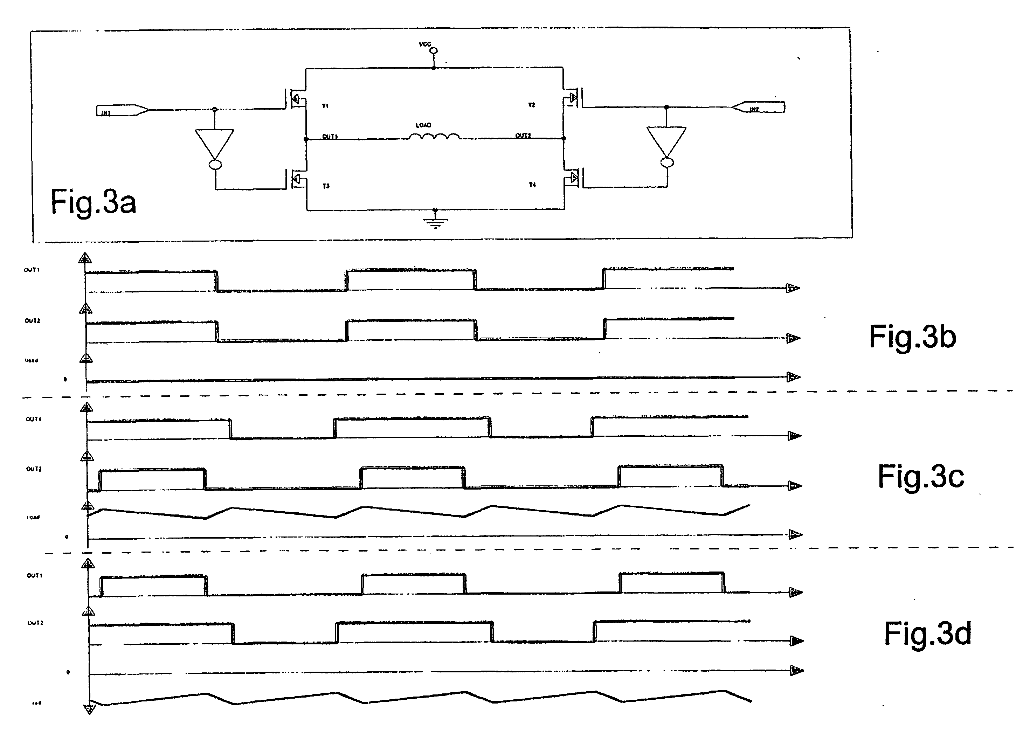

Figures 3a, 3b, 3c and 3d depict a PWM driving system of a generic R-L actuator through a bridge stage, according to a Phase Shift Modulation mode (PSM).

The two signals IN1 and IN2, are obtained by converting a digital command datum DATAIN, mapped on N+3 bits, into two PWM signals.

In the ensuing description, VAL refers to the N most significant bits (MSB) of DATAIN and *VAL+1 is the complementary value of VAL in respect to 2^{N}/2.

Moreover, reference will be made to a system wherein, for the sake of simplicity, N=8, bearing in mind that theoretically N may have any value.

It should be noted that the null current condition through the load occurs when the two input signals IN1 and IN2 are perfectly in phase with each other and both having a 50% duty cycle.

This corresponds to input the BYTE/PWM converter two values VAL and *VAL+1 of magnitude equivalent to the decimal value 128 or to 2^{N}/2) for a generic number of bits N.

As graphically shown in Fig. 4, in a complete up/down counter period, there are four instants of comparison among the VAL and *VAL+1 values and the current value of the counter.

In the example of Fig. 4, the VAL value varies from 145 to 146 and, correspondingly, the value of *VAL+1, symmetric in respect to 128, is decreased from 111 to 110.

Respectively, this corresponds to an A+C decrement of the duty cycle of the IN1 signal and to a B+D duty cycle increment of the IN2 signal.

The differential duty cycle DIFF, is therefore increased by A+B+C+D for a unit increment/decrement of VAL and *VAL+1.

On the time scale, the A, B, C, D instants are equal to a period of the clock SysClk, which means that the differential variation of duty cycle equivalent to A+B+C+D, has a duration of four beats of the clock SysClk.

Fundamentally, the method of the present invention consists in separately handling the four instants of comparison between the input datum and the output of the up/down counter, and in ensuring that the duty cycle variation, in terms of a temporal space, is substantially halved, by exploiting the half clock period of the system.

This allows to establish 7 intermediate levels of duty cycle variation between any two numerically consecutive values of the 8-bit input datum.

To attain this, it is necessary that the input datum be incremented to N+3 bits, where the N bits are converted normally by the BYTE/PWM converter while the three additional bits are properly decoded to obtain the 7 intermediate levels of duty cycle variation, of a duration of half the clock period.

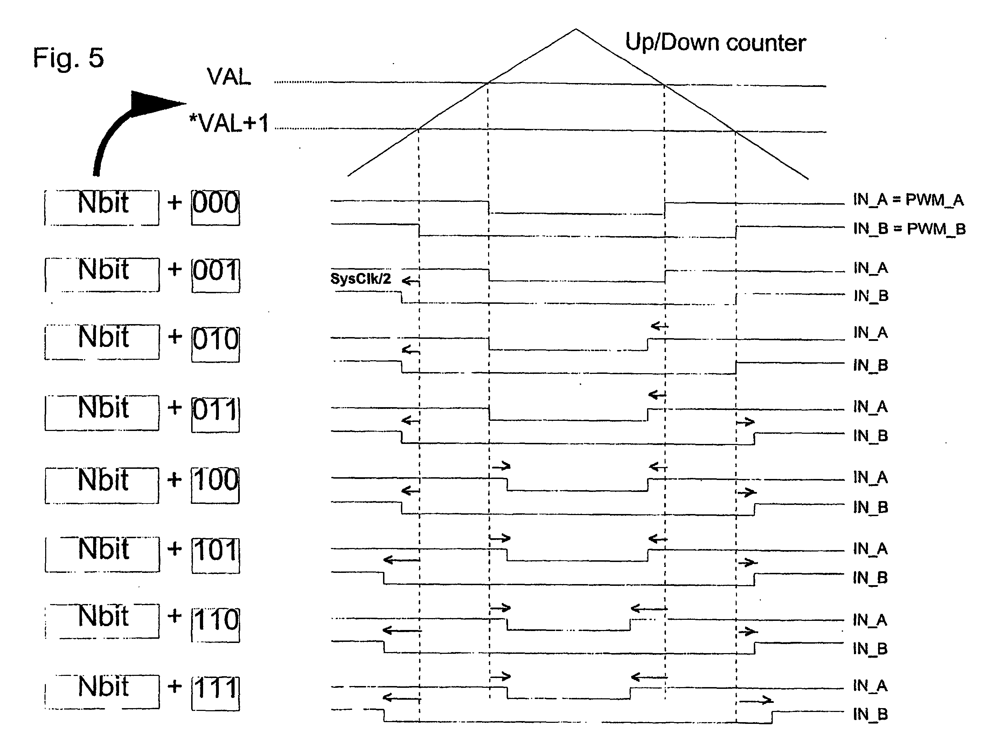

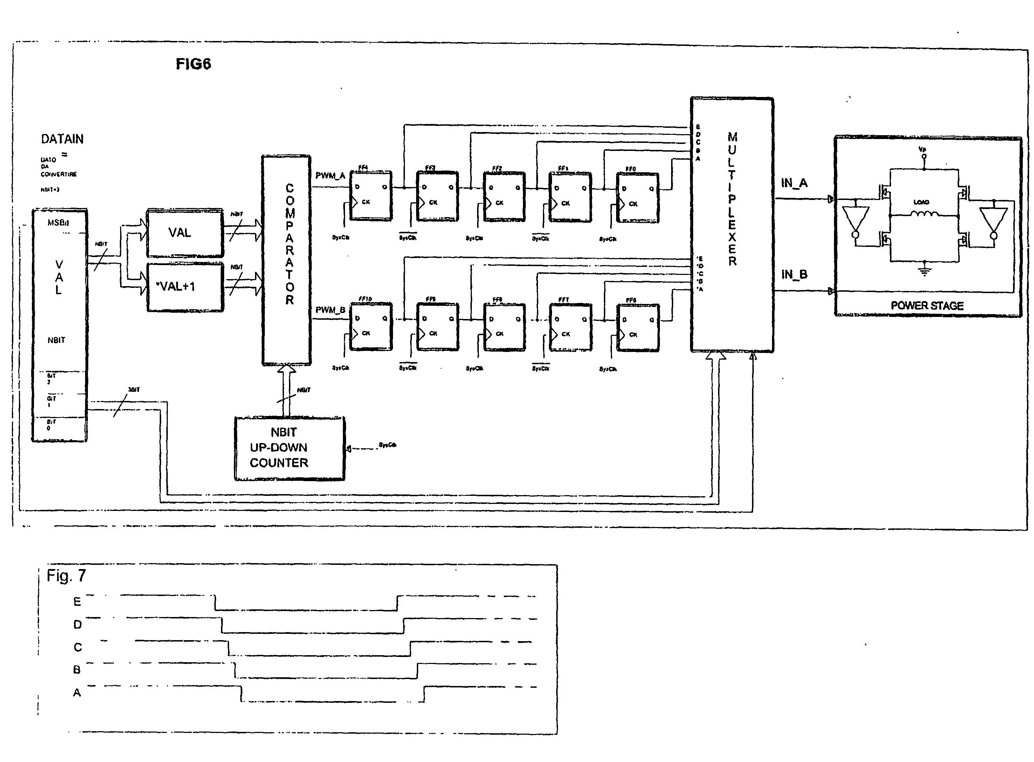

The timing diagram of Fig. 5 shows the relation between the duty cycle variations obtained on the base of the outputs, PWM_A and PWM_B of the BYTE/PWM converter of Fig. 6, depending on the decoding of the three least significant bits that are added to the input N bits.

If the three least significant bits are equal to 000, it is not effected any operation, if the value is 001, the PWM_B negative front is shifted by half a period of the clock, if the value is 010, the PWM_B negative front and the PWM_A positive front are shifted by half a period of the clock and so forth, as illustrated in Fig. 5.

Therefore, the system of the invention provides for the conversion of a numeric command datum in a PWM signal having a greater duty cycle definition through the number of bits of the up/down counter remains unaltered.

More precisely, if N is the number of bits of the up/down counter, the system of the invention allows for the conversion of an input datum mapped on N+3 bits.

Fig. 6 shows a block diagram that realizes a system according to the present invention.

The DATAIN datum to be converted in a PWM signal consists of a word of N+3 bits, where by way of example N=8. The most significant N bits, stored in two registers VAL and *VAL+1, are compared with the content of the up/down counter obtaining two PWM signals, PWM_A and PWM_B respectively, according to the technique described in the above noted European patent application No. 96830295.0 (EP-A-0 809 349).

According to the present invention, the pair of signals thus generated are sent to respective cascade of flip-flops.

By referring to the block diagram of Fig. 6, the PWM_A output is coupled to the input of the flip-flop FF4 whose output is fed to the input of the FF3 and so forth to FF0, while the PWM_B output is coupled to the input of the flip-flop FF10 whose output is fed to the input of FF9 and so forth to FF6.

To the flip-flops of even order is applied the system's clock SysClk, while the inverted clock signal *SysClk is fed to the flip-flops of odd order. Therefore, the five E, D, C, B, A signals are produced, outphased with each other by half a clock period, and with frequency and duty cycle equal to that of the PWM_A signal. The same applies for the PWM_B signal whereby the five signals generated are identified as *E, *D, *C, *B, *A.

Fig. 7 illustrates the signals thus obtained.

By processing these signals, it is possible to shift the rising edge or the falling edge by a minimum time interval equivalent to a half a clock period, thus incrementing the resolution of the PWM signal compared to what occurred in the known system.

This is made possible by using the three least significant bits of the input data to be converted; decoding the value of the three least significant bits for actuating logic sum and multiplication operations among the five generated signals that permit duty cycle variations eight times smaller than those that were obtainable with the known system, while the number of bits of the up/down counter remains advantageously unaltered.

The following table indicates how the three least three significant bits are used for identifying seven intermediate levels between two numerically consecutive values representable with an N bit dynamic.

| **8msb** | **bit 2** | **bit1** | **bit0** | **effective value** |
|---|---|---|---|---|
| 175 | 0 | 0 | 0 | 175.0 |
| 175 | 0 | 0 | 1 | 175.125 |
| 175 | 0 | 1 | 0 | 175.250 |
| 175 | 0 | 1 | 1 | 175.375 |
| 175 | 1 | 0 | 0 | 175.500 |
| 175 | 1 | 0 | 1 | 175.625 |
| 175 | 1 | 1 | 0 | 175.750 |
| 175 | 1 | 1 | 1 | 175.875 |
| 176 | 0 | 0 | 0 | 176.0 |

The block MULTIPLEXER shown in Fig. 6 receives as inputs the five signals generated by the cascade of flip-flops fed with the PWM_A signal and the five signals generated by the cascade of flip-flops fed with the PWM_B signal. Moreover, it receives the three least significant bits of the input datum to be converted plus the most significative bit, MSBit, that indicates whether the value of VAL of the input datum DATAIN is greater or smaller than 128 (for N=8).

The MULTIPLEXER block increments the resolution of the duty cycle of the PWM_A and PWM_B signals, generated by the COMPARATOR, generating the two IN_A and IN_B signals having a higher resolution as function of the values of the three least significant bits of the input datum.

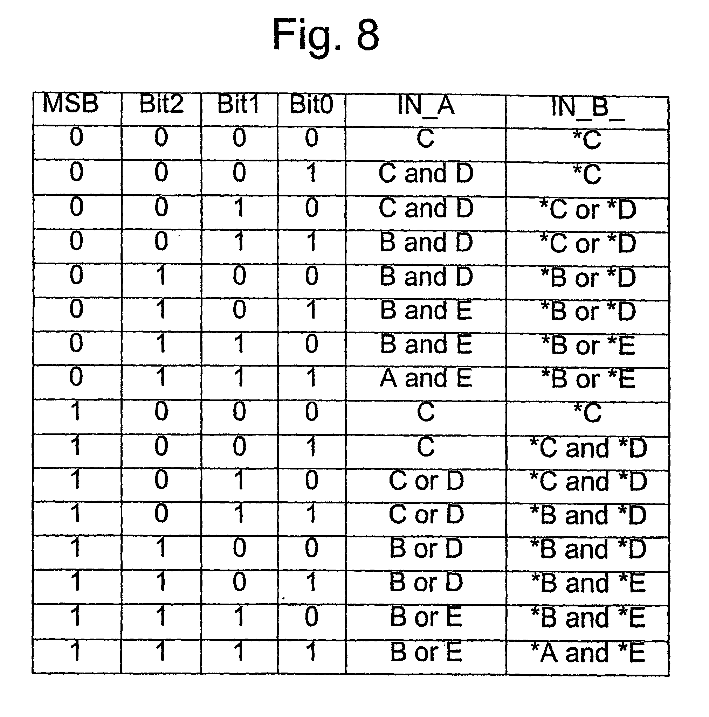

The truth table of Fig. 8 indicates the logic operations performed by MULTIPLEXER block as function of the decoding of the three least significant bits of the input datum.

For example, in the case of a conversion of a value equal to 190.625, VAL, the 8 most significant bits of DATAIN, is the integer part which in binary form is: 10111110, while the three least significant bits that represent the fractional part, in binary form, are equal to 101. The eight most significative bits (VAL) are then compared with the content of the up/down counter and transformed into the two signals PWM_A and PWM_B.

The MULTIPLEXER block, upon decoding the three least significative bits, considering that the VAL datum is greater than 128, implements the logic operations among the five output signals of the cascade of flip-flops fed with the PWM_A signal and the five output signals of the cascade of flip-flops fed with the PWM_B signal and outputs the two signals: IN_A and IN_B, signals having a duty cycle modified such to add the fractional part to the signals PWM_A and PWM_B.

In the case considered, the MULTIPLEXER generates the IN_A signal by effecting a logic OR operation between the signals B and D, and the IN_B by effecting a logic AND operation between the signals *B and *E.

Likewise, if we convert a DATAIN input signal with a different fractional part, compared to the example just considered, the MULTIPLEXER block will always carry out AND/OR logic operations among the signals generated by the cascades of flip-flops in accordance with the truth table of Fig. 8.

## Claims

1. A method of driving a load in a PWM mode as function of numeric command values of a certain number (N) of bits by converting the current numeric command value in at least a driving PWM signal (PWM_A, PWM_B) having a fixed frequency and a duty cycle proportional to the numeric command value, comparing through a comparator (COMPARATOR) the N bit numeric value with the counter of an up/down counter of the same number (N) of bits (N BIT UP/DOWN COUNTER) functioning in a continuous mode at the frequency of a system clock signal (SysClk), **characterized in that** it comprises the steps of :
incrementing by more than a unit (N+3) the number of bits on which a certain command value is mapped;
converting the N most significant bits with the exception of said additional bits of said command value by means of said comparator and up/down counter;
decoding said additional bits by generating a corresponding plurality of intermediate levels of variation of the duty cycle, each of which has a duration of half a clock period (SysClk/2) producing a plurality of signals, outphased among each other by half a clock period (A, B, C, D, E, A', B', C', D', E');
generating said driving PWM signal (IN_A, IN_B) by multiplexing (MULTIPLEXER) said signals outphased among each other by half a clock period, carrying out logic combinations of such signals as function of the most significative bit (MSB) of the numeric command value and of said least significative additional bits.

2. The method according to claim 1, wherein the the load is driven by means of an output bridge stage controlled by a complementary pair of PWM signal (IN_A, IN_B) obtained by storing in a first register (VAL) the most significative N bits of the numeric command value without said additional bits and in a second register (*VAL+1) the same said most significative N bits such that to a unit increment of the content of the first register (VAL) corresponds a unit decrement of the content of the second register (*VAL+1) to maintain symmetry in respect to the value 2^{N}/2 corresponding to a null current through the load and wherein said converting, decoding and multiplating steps are duplicated in parallel for the respective contents of said two registers (VAL, *VAL+1).

3. A conversion system of a numeric value (DATAIN) of a certain number of bits (N+3) in a PWM signal (PWM_A, PWM_B) having a fixed frequency and a duty cycle proportional to the numeric value (IN_A, IN_B) comprising a comparator (COMPARATOR) comparing N most significative bits of the input numeric value with the content of an up/down counter (N BITS UP/DOWN COUNTER) of said number (N) of bits functioning in a continuous mode at the frequency of a system clock signal (SysClk), **characterized in that** it comprises
at least a cascade of flip-flops (FF4, FF3, FF2, FF1, FF0, FF5, FF6, FF7, FF8, FF9) fed with said PWM signal (PWM_A, PWM_B), the flip-flops of even order of said cascade being fed with said system clock signal (SysClk), while the flip-flops of odd order of said cascade being fed with an inverted replica of said clock signal (*SysClk), the output of each flip-flop of said cascade being fed to a respective input of a multiplexer (MULTIPLEXER) performing a logic combination among said input signals as function of the most significative bit (MSB) and of the least significative bits not compared by said comparator (COMPARATOR) and outputting said PWM driving signal (IN_A, IN_B).

## Patentansprüche

1. Verfahren zum Steuern einer Last im PWM Modus in Abhängigkeit von digitalen Befehlswerten einer bestimmten Zahl (N) Bit durch Umwandlung des laufenden digitalen Befehlswertes in mindestens ein PWM Steuerungssignal (PWM_A, PWM_B), das eine feste Frequenz und einen Arbeitskreislauf, der zum digitalen Befehlswert proportional ist, aufweist, Vergleich durch einen Komparator (COMPARATOR) des N Bit umfassenden digitalen Befehlswert mit dem Zähler eines Auf/Ab- Zählers derselben Zahl (N) Bits (N BIT UP/DOWN COUNTER), der in kontinuierliche Weise mit der Frequenz eines Systemclocksignals (SysClk) arbeitet
**dadurch gekennzeichnet, dass** es folgende Schritte umfasst:
Inkrementierung durch mehr als einer Einheit (N+3) der Bitzahl auf welcher ein bestimmtes digitales Befehlswert mappiert wird;
Umwandlung der N höchst aussagekräftige Bits, mit der Ausnahme der genannten weiteren Bits des genannten Befehlswertes, durch den genannten Komparator und Auf/Ab- Zähler;
Dekodierung der genannten weiteren Bits durch Erzeugung einer entsprechenden Mehrzahl zwischenliegende, je eine halbe Clockperiode (SysClk) dauernde , die eine Mehrzahl Signale erstellen, die durch eine halbe Clockperiode (A, B, C, D, E, A', B', C', D', E') voneinander phasenverschoben sind;
Erzeugung des genannten PWM Steuerungssignals (IN_A, IN_B) durch Multiplexierung (MULTIPLEXER) der genannten Signale, die durch eine halbe Clockperiode voneinander phasenverschoben sind, Durchführung von logischen Kombinationen der genannten Signale in Abhängigkeit von den höchst aussagekräftigen Bits (MSB) des digitalen Befehlswertes und der genannten weiteren mindestaussagekräftigen Bits.

2. Verfahren nach Anspruch 1, wobei die Last durch eine Ausgabebrückenstufe gesteuert wird, die durch ein komplementäres Paar PWM Steuerungssignals (IN_A, IN_B) angesteuert werden, die durch Speicherung in einem ersten Register (VAL) der N höchstaussagekräftigen Bits des genannten digitalen Befehlswertes ohne die genannte weitere Bits und in einem zweiten Register (*VAL+1) derselben genannten höchstaussagekräftigen Bits, so dass, einem einheitlichen Inkrement des Gehaltes des ersten Registers (VAL) ein einheitliches Dekrement des Gehaltes des zweiten Registers (*VAL+1) entspricht, womit eine Symmetrie bezogen zum Wert 2^{N}/2 erhalten wird, das einem abwesenden Strom durch die Last entspricht, und wobei die genannte Umwandlungs-, Dekodierungs- und Multiplexierungsstufen parallel für die respektive Gehalte der genannten zwei Register (VAL, *VAL+1) reproduziert werden.

3. System zur Umwandlung eines digitalen Wertes (DATAIN) einer bestimmten Zahl Bits (N+3) in ein PWM Signal (PWM_A, PWM_B), dessen Frequenz fest ist und dessen Arbeitszyklus einem digitalen Wert (IN_A, IN_B) proportional ist, umfassend einen Komparator (COMPARATOR), der die N höchstaussagekräftige Bits des digitalen Eingangswertes mit dem Gehalt eines Auf/Ab- Zählers (N BIT UP/DOWN COUNTER) der genannten Zahl (N) Bits vergleicht und in einer kontinuierlichen Weise mit der Frequenz eines Systemclocksignals (SysClk) arbeitet,
**dadurch gekennzeichnet, dass** es
mindestens eine Kaskade Kippschaltungen (Flip-flop) (FF4, FF3, FF2, FF1, FF0, FF5, FF6, FF7, FF8, FF9) umfasst, die mit dem genannten PWM Signal (PWM_A, PWM_B) versorgt werden, wobei die Kippschaltungen geraden Ordnung mit dem genannten Systemclocksignal (SysClk) versorgt werden, während die Kippschaltungen ungeraden Ordnung der genannten Kaskade mit einer invertierten Verdoppelung des genannten Systemclocksignals (*SysClk) versorgt werden, wobei die Ausgabe jeder Kippschaltung der genannten Kaskade einem entsprechenden Eingang eines Multiplexers (MULTIPLEXER) versorgt wird, wodurch eine logische Verknüpfung der genannten Eingabensignale in Abhängigkeit von dem höchstaussagekräftigen Bit (MSB) und den mindestaussagekräftigen Bits, die durch den genannten Komparator (COMPARATOR) nicht vergleicht wurden erzeugt wird und den genannten PWM Steuerungssignal (IN_A, IN_B) ausgegeben wird.

## Revendications

1. Une méthode pour le pilotage d'une charge en mode PWM en fonction de valeurs de commande numériques d'un certain nombre (N) de bits par conversion de la valeur de commande numérique actuelle en au moins un signal PWM de pilotage (PWM_A, PWM_B) ayant une fréquence fixe et un cycle de travail proportionnel à la valeur de commande numérique, comparaison, par le moyen d'un comparateur (COMPARATOR), de la valeur numérique à N bits avec le compteur d'un compteur à croître/décroître du même nombre (N) de bits (N BIT UP/DOWN COUNTER) qui travaille dans une mode continue à la fréquence d'un signal d'horloge de système (SysClk), **caractérisée en ce qu'**elle comprend les étapes suivantes:
incrément de plus d'une unité (N+3) du nombre de bits sur lequel une certaine valeur de commande est mappée;
conversion des N bits les plus significatifs, à l'exception des susdits bits additionnels, de ladite valeur de commande, par le moyen desdits comparateur et compteur a croître/décroître;
décodage desdits bits additionnels en générant une pluralité correspondante de niveaux intermédiaires de variation du cycle de travail, chacun desquels a une durée de la moitié d'une période d'horloge, en produisant une pluralité de signaux qui sont hors-phase entre eux de la moitié d'une période d'horloge (A, B, C, D, E, A', B', C',D',E');
génération dudit signal PWM de pilotage (IN_A, IN_B) par multiplexage (MULTIPLEXER) desdits signaux hors-phase entre eux de la moitié d'une période d'horloge, en exécutant des combinaisons logiques de tels signaux en fonction du bit le plus significatif (MSB) de la valeur de commande numérique et desdits bits additionnels les moins significatifs.

2. Une méthode selon la revendication 1, dans laquelle la charge est pilotée par une étage de pont d'output qui est contrôlée par une couple complémentaire de signaux PWM (IN_A, IN_B) obtenus en mémorisant dans un premier registre (VAL) les N bits les plus significatifs de ladite valeur de commande numérique sans lesdits bits additionnels, et dans un deuxième registre (*VAL+1) lesdites mêmes N bits les plus significatifs, de telle façon qu'à un incrément unitaire du contenu du premier registre (VAL) corresponde un décrément unitaire du contenu du deuxième registre (*VAL+1) afin de maintenir la symétrie par rapport à la valeur 2^{N}/2 correspondant à un courant nulle à travers de la charge, et dans laquelle lesdites étapes de conversion, décodage et multiplexage sont doublés en parallèle pour les respectifs contenus desdits deux registres (VAL, *VAL+1).

3. Un système de conversion d'une valeur numérique (DATAIN) d'un certain nombre (N+3) de bits en un signal PWM (PWM_A, PWM_B) ayant une fréquence fixe et un cycle de travail proportionnel à la valeur numérique (IN_A, IN_B) comprenant un comparateur (COMPARATOR) qui compare les N bits les plus significatifs de la valeur numérique introduite avec le contenu d'un compteur à croître/décroître (N BIT UP/DOWN COUNTER) dudit nombre (N) de bits qui opère dans une mode continuelle à la fréquence d'un signal d'horloge de système (SysClk), **caractérisé en ce qu'**il comprend
au moins une chute de multivibrateurs bistables (flip-flops) (FF4, FF3, FF2, FF1, FF0, FF5, FF6, FF7, FF8, FF9) qui sont alimentés avec ledit signal PWM (PWM_A, PWM_B), les multivibrateurs bistables d'ordre pair de ladite chute étant alimentés avec ledit signal d'horloge de système (SysClk), et les multivibrateurs bistables d'ordre impair de ladite chute étant alimentés avec une répétition inverse dudit signal d'horloge de système (SysClk), l'output de chaque multivibrateur bistable de ladite chute étant alimenté à une respective entrée d'un multiplexeur (MULTIPLEXER) performant une combinaison logique entre lesdits signaux d'entrée en fonction du bit le plus significatif (MSB) et des bits les moins significatifs qui ne sont pas comparés par ledit comparateur (COMPARATOR) et émettant ledit signal PWM de pilotage (PWM_A, PWM_B).
